(19) Europäisches Patentamt
European Patent Office
Office européen des brevets

(11) **EP 2 484 930 A2**

(12) **EUROPÄISCHE PATENTANMELDUNG**

(43) Veröffentlichungstag:
**08.08.2012 Patentblatt 2012/32**

(51) Int Cl.:
*F16D 25/061* [(2006.01)]    *F16D 48/02* [(2006.01)]

(21) Anmeldenummer: **12000723.2**

(22) Anmeldetag: **03.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.02.2011  DE 102011010361**

(71) Anmelder: **Engineering Center Steyr GmbH & Co KG**
**4300 St. Valentin (AT)**

(72) Erfinder:
• **Brenner, Christoph, Dr.**
**4400 Steyr (AT)**
• **Deinhofer, Hans**
**3352 St. Peter i. d. Au (AT)**

(74) Vertreter: **Manitz, Finsterwald & Partner GbR**
**Postfach 31 02 20**
**80102 München (DE)**

(54) **Kupplungseinrichtung**

(57)    Eine Kupplungseinrichtung weist ein erstes Kupplungsteil (12) und ein zweites Kupplungsteil (14), die selektiv formschlüssig miteinander in Eingriff bringbar sind, sowie eine Steuereinrichtung auf, die eine Ausrückeinheit (20) und eine mittels eines Fluiddrucks (P) betreibbare Aktuatoreinheit (18) umfasst. Durch die Ausrückeinheit ist eine die Kupplungsteile ausrückende Kraft ($F_F$) erzeugbar und durch die Aktuatoreinheit ist eine die Kupplungsteile einrückende Kraft ($F_A$) erzeugbar. Der Steuereinrichtung umfasst eine Druckhalteeinrichtung (24,28), um einen die Aktuatoreinheit beaufschlagenden Fluiddruck gemäß einer vorbestimmten Charakteristik abzubauen.

Fig.1

**Beschreibung**

Die vorliegende Erfindung betrifft eine Kupplungseinrichtung für einen Antriebsstrang eines Kraftfahrzeugs, mit einem ersten Kupplungsteil und einem zweiten Kupplungsteil, die selektiv formschlüssig miteinander in Eingriff bringbar sind.

Derartige Kupplungseinrichtungen finden insbesondere als Sperrenkupplung eines Differentialgetriebes Anwendung, beispielsweise in einem Achsdifferential oder einem Zentraldifferential eines Kraftfahrzeugs.

Sperrenkupplungen mit rotierenden, formschlüssig zusammenwirkenden Kupplungsteilen haben den Vorteil, dass sie in der Lage sind, zuverlässig sehr hohe Drehmomente zu übertragen. Reibungskupplungen mit einer ähnlichen Leistungsfähigkeit sind deutlich größer und teurer als Kupplungseinrichtungen der eingangs genannten Art. Formschlüssige Kupplungseinrichtungen sind allerdings mit dem Nachteil behaftet, dass sie - verglichen mit ähnlich leistungsfähigen Reibungskupplungen - schwieriger zu steuern sind. Ein Einrücken derartiger Kupplungseinrichtungen setzt grundsätzlich voraus, dass zwischen den beiden Kupplungsteilen keine oder lediglich eine geringe Drehzahldifferenz vorliegt. Für ein Ausrücken muss eine ausreichend niedrige Drehmomentübertragung vorliegen. Insbesondere kann beim Ausrücken eine große aufzubringende Schaltkraft erforderlich sein, da zwischen den formschlüssig ineinander greifenden Komponenten der Kupplungsteile eine einem Ausrücken entgegenwirkende axiale Reibungskraft wirkt, die unter anderem von dem Betrag des durch die Kupplungseinrichtung momentan übertragenen Drehmoments abhängt.

Die EP 0 510 457 A1 offenbart eine Kupplungseinrichtung der vorstehend genannten Art. Sie umfasst ein axialfest angeordnetes Kupplungsteil, ein axial bewegbares Kupplungsteil und eine Druckfeder, durch die eine die Kupplungsteile ausrückende Kraft bereitgestellt wird. Diese Kraft ist im Wesentlichen so groß wie die axiale Reibungskraft zwischen den in Eingriff stehenden Kupplungsteilen bei einem sehr geringen übertragenen Drehmoment. Wenn die zwischen den Kupplungsteilen wirkende Reibungskraft die von der Druckfeder erzeugte Kraft unterschreitet, wird das axial bewegbare Kupplungsteil von dem axialfesten Kupplungsteil weggedrückt, wodurch ein selbsttätiges Ausrücken der Kupplungseinrichtung bewirkt wird. Mit anderen Worten kompensiert die genannte Druckfeder die zwischen den Kupplungsteilen wirkende Reibungskraft, um ein selbsttätiges Ausrücken der Kupplungseinrichtung zu einem Zeitpunkt zu erreichen, in dem das übertragene Drehmoment einen bestimmten Schwellenwert unterschreitet. Ab diesem Zeitpunkt wird das Ausrücken schlagartig eingeleitet.

Da jedoch die beim Ausrücken zu überwindende Reibungskraft nicht nur von dem über die Kupplung übertragenen Drehmoment, sondern unter anderem auch von der Dimension und Ausgestaltung der Kupplungsteile abhängt, muss für jede Variante der Kupplungseinrichtung eine Druckfeder mit geeigneten Eigenschaften bereitgestellt werden, damit ein selbsttätiges Ausrücken in der gewünschten Weise erfolgen kann. Verschleißerscheinungen an den Komponenten der Kupplungseinrichtung führen zudem zu einer Verschiebung des Schwellenwertes, bei dem das selbständige Ausrücken eingeleitet wird. Diese Verschiebung lässt sich nur durch den kostspieligen Austausch der betroffenen Komponenten kompensieren.

Nachteilig ist bei der vorstehend beschriebenen Konstruktion ferner, dass das axial bewegte Kupplungsteil bei einem Wegfall der Reibungskraft - d.h. zu dem Zeitpunkt des Ausrückvorgangs, in dem der Formschluss zwischen den Kupplungsteilen aufgehoben wird - plötzlich ungehindert beschleunigt wird. Dies führt zu einem erhöhten Verschleiß der beteiligen Komponenten und damit zu einer verringerten Lebensdauer der Kupplungseinrichtung. Außerdem treten störende Schaltgeräusche auf.

Ein weiterer nachteiliger Effekt, der bei bekannten Kupplungseinrichtungen beobachtet werden kann, ist das sogenannte Schaltpendeln. Es kann auftreten, wenn es während des Ausrückvorgangs zu vergleichsweise großen Schwankungen des durch die Kupplungseinrichtung übertragenen Drehmoments kommt, z.B. bei "Stick-Slip"-Effekten an den Reifen und einem schnellen Ausschalten einer die Kupplungsteile einrückenden Aktuatoreinheit. Dies führt zu einer raschen Abfolge von unerwünschten Ein- und Ausrückvorgängen, die eine reduzierte Traktion eines die Kupplungseinrichtung umfassenden Antriebsstrangs eines Fahrzeugs und eine starke Beanspruchung der Kupplungseinrichtung nach sich ziehen.

Ferner ist zu berücksichtigen, dass bei einer pneumatisch aktuierten Kupplungseinrichtung gefährliche Blokkaden durch Vereisung auftreten können. Wird nämlich die einen Aktuator der Kupplungseinrichtung beaufschlagende Druckluft abrupt abgelassen, um die Kupplungseinrichtung auszurücken, so entweicht die Druckluft unter sehr schneller Expansion in die Umgebung. Dabei tritt eine Abkühlung auf, die zu einem Gefrieren von Feuchtigkeitsspuren im Bereich des Aktuators, insbesondere im Bereich einer Druckabbauleitung des Aktuators führen kann. Im Extremfall werden der Aktuator und/oder die Druckabbauleitung durch die Vereisung blockiert, so dass die Kupplungseinrichtung nicht mehr ordnungsgemäß betrieben werden kann.

Es ist daher eine Aufgabe der vorliegenden Erfindung, eine flexibel einsetzbare Kupplungseinrichtung der vorstehend genannte Art zu schaffen, die ein zuverlässiges und schonendes Ausrücken der Kupplungsteile sicherstellt.

Die Lösung dieser Aufgabe erfolgt durch eine Kupplungseinrichtung mit den Merkmalen des Anspruchs 1.

Wie bereits erwähnt, weist die Kupplungseinrichtung ein erstes Kupplungsteil und ein zweites Kupplungsteil auf, die selektiv formschlüssig miteinander in Eingriff bringbar sind. Ferner ist eine Steuereinrichtung vorgesehen, die eine Ausrückeinheit und eine mittels eines Fluiddrucks betreibbare Aktuatoreinheit umfasst. Durch die Ausrückeinheit ist eine die Kupplungsteile ausrückende Kraft erzeugbar, während durch die Aktuatoreinheit eine die Kupplungsteile einrückende Kraft erzeugbar ist.

Erfindungsgemäß ist der Steuereinrichtung eine Druckhalteeinrichtung zugeordnet, um einen die Aktuatoreinheit beaufschlagenden Fluiddruck gemäß einer vorbestimmten Charakteristik abzubauen. Es ist also nicht vorgesehen, die einrückende Kraft schlagartig auf Null absinken zu lassen, um ein Ausrücken der Kupplungseinrichtung zu bewirken, sondern die Reduktion der einrückenden Kraft wird durch die Druckhalteeinrichtung beeinflusst. Beispielsweise wird der Ausrückvorgang durch einen verzögerten Druckabbau sanfter gestaltet, wodurch die beteiligen Komponenten weniger belastet werden, ohne dass die Dynamik der Kupplungseinrichtung in relevantem Maße leidet. Auch ein Schaltpendeln kann effizient verhindert werden, da der Druckabbau in der Aktuatoreinheit gemäß einer geeigneten Zeitkonstante erfolgen kann. Ferner ermöglicht eine Modifikation der Druckhalteeinrichtung eine Anpassung ihrer Druckabbaucharakteristik, wodurch die Kupplungseinrichtung justiert werden kann, um beispielsweise Verschleißerscheinungen zu kompensieren oder geänderten Anforderungen an die Schaltdynamik der Kupplungseinrichtung Rechnung zu tragen. Die Druckhalteeinrichtung kann somit auch als Druckabbausteuereinrichtung bezeichnet werden.

Mit anderen Worten basiert die Funktionsweise der vorstehend beschriebenen Kupplungseinrichtung auf einer bewussten Beeinflussung eines Kräftegleichgewichts zwischen einrückenden und ausrückenden Kräften mit Hilfe der Druckhalteeinrichtung. Zu einem Ausrücken der Kupplungseinrichtung kommt es, wenn die von der Ausrückeinheit bereitgestellte Kraft die Summe der das Ausrücken verhindernden Kräfte - nämlich der Reibungskraft und der durch die Aktuatoreinheit erzeugten Einrückkraft - überschreitet. Eine vorbestimmte Charakteristik des Abbaus des die Aktuatoreinheit beaufschlagenden Fluiddrucks ermöglicht eine bessere Kontrolle über dieses Kräftegleichgewicht und somit über den Ausrückvorgang, so dass dieser nicht von Fluktuationen des während des Ausrückens durch die Kupplungseinrichtung übertragenen Drehmoments und damit von der zwischen den Kupplungsteilen wirkenden Reibungskraft dominiert wird. Insbesondere wird ein vorzeitiges Ausrücken der Kupplungseinrichtung - und damit letztlich das Auftreten von Schaltpendeln - verhindert.

Bei dem verwendeten Arbeitsfluid zum Beaufschlagen der Aktuatoreinheit kann es sich um Luft handeln (pneumatisches Betreiben der Aktuatoreinheit) oder um eine Flüssigkeit, insbesondere Öl (hydraulisches Betreiben der Aktuatoreinheit). Der Fluiddruck in dem Aktuator kann beispielsweise durch einen angeschlossenen Druckspeicher oder durch eine Pumpe erzeugt werden. In dem letztgenannten Fall ist es bevorzugt, wenn die Pumpe nicht in Abhängigkeit einer Drehzahldifferenz zwischen den beiden Kupplungsteilen, sondern unabhängig hiervon angetrieben wird. Andernfalls erfolgt das Einrücken der formschlüssig zusammenwirkenden Kupplungsteile zu langsam oder ist aufgrund der bereits aufgebauten Drehzahldifferenz überhaupt nicht mehr möglich.

Es ist ausreichend und bevorzugt, wenn die genannte Druckhalteeinrichtung lediglich auf das Arbeitsfluid der Aktuatoreinheit wirkt. Hierdurch unterscheidet sich die genannte Druckhalteeinrichtung beispielsweise von Drosselventilen oder Rückschlagventilen, die bei bekannten Kupplungen mit flüssigem Arbeitsfluid zum Entlüften eines Druckraums dienen.

Gemäß einer vorteilhaften Ausführungsform umfasst die Druckhalteeinrichtung eine Drosseleinrichtung, mit welcher der die Aktuatoreinheit beaufschlagende Fluiddruck in vorbestimmter Weise gedrosselt abbaubar ist. Durch die gedrosselte Reduktion des Fluiddrucks wird die Kupplungseinrichtung nach einem Deaktivieren der Aktuatoreinheit bis zum Erreichen des vorstehend beschriebenen Kräftegleichgewichts noch für einen bestimmten Zeitraum sicher geschlossen gehalten. Dadurch kann beispielsweise ein Schaltpendeln in Situationen verhindert werden, in denen die zwischen den Kupplungsteilen wirkende Reibungskraft aufgrund von Drehmomentfluktuationen nach einem Abschalten der Aktuatoreinheit sehr schnell auf geringe Werte absinkt und anschließend wieder deutlich ansteigt.

Da die Drosseleinrichtung wie erläutert zum Verzögern des Ausrückens der Kupplungsteile dient, ist es nicht erforderlich, dass die Drosseleinrichtung eine temperaturabhängige oder temperaturkompensierende Drosselcharakteristik besitzt. Damit die Drosseleinrichtung einen vorteilhaft einfachen Aufbau besitzt, ist es bevorzugt, wenn die Drosseleinrichtung keine temperaturabhängige oder temperaturkompensierende Drosselcharakteristik besitzt.

Alternativ oder zusätzlich zu der Drosseleinrichtung ist es möglich, dass die Druckhalteeinrichtung ein Druckhalteventil umfasst, mit dem ein die Aktuatoreinheit beaufschlagender minimaler Fluiddruck, d.h. ein vorbestimmter Haltedruck aufrechterhalten wird. Mit anderen Worten ist ein die Aktuatoreinheit beaufschlagender Fluiddruck mittels des Druckhalteventils lediglich bis zu einem vorbestimmten minimalen Fluiddruck abbaubar. Der minimale Fluiddruck definiert, bis wann im eingerückten Zustand der Kupplungseinrichtung noch ein Kräftegleichgewicht zwischen der ausrückenden Kraft der Ausrückeinheit einerseits und der axialen Reibungskraft sowie der von der Aktuatoreinheit erzeugten einrückenden Kraft andererseits herrscht. Der mittels des Druckhalteventils vorgebbare minimale Fluiddruck legt im Ergebnis fest (im Falle des zusätzlichen Vorhandenseins der vorgenannten Drosseleinrichtung spätestens nach der gedrosselten Reduktion des Fluiddrucks), welches übertragene Drehmoment unterschritten werden muss, damit die Ausrückeinheit die Kupplungsteile voneinander entfernt. Somit kann durch die Wahl eines geeigneten minimalen Fluiddrucks der Schaltpunkt des selbsttätigen Ausrückens der Kupplungseinrichtung beeinflusst werden, ohne dass hierfür die Ausrückeinheit (z.B. Druckfeder) ausgetauscht werden muss.

Die Sicherstellung eines minimalen Fluiddrucks kann auch als pneumatischer oder hydraulischer "Anschlag" für die Aktuatoreinheit genutzt werden. Durch die Wahl des minimalen Fluiddrucks kann folglich die Ruheposition des axial bewegbaren Kupplungsteils im ausgerückten Zustand definiert und damit die Kupplungseinrichtung justiert und an veränderte Bedingungen angepasst werden. Insbesondere kann durch die Wahl einer geeigneten Ruheposition des axial bewegbaren Kupplungsteils der beim Einrücken der Kupplungsreinrichtung zu überwindende Lüftweg minimiert und damit die Schaltdynamik der Kupplungseinrichtung optimiert werden.

Ein weiterer Vorteil eines Druckhalteventils besteht insbesondere bei pneumatischen Aktuatoreinheiten darin, dass der auf die Aktuatoreinheit wirkende minimale Druck der Druckluft so gewählt werden kann, dass er über dem Umgebungsdruck liegt. Ein Eindringen von Feuchtigkeit in die Aktuatoreinheit ist daher nicht möglich und die Gefahr von Vereisung wird ausgeschaltet.

Bevorzugt ist der genannte, die Aktuatoreinheit beaufschlagende minimale Fluiddruck geringer als der zum Einrücken der Kupplungsteile vorgesehene Fluiddruck. Dadurch wird ein zuverlässiges Ausrücken der Kupplungseinrichtung gewährleistet, während gleichzeitig verhindert wird, dass der die Aktuatoreinheit beaufschlagende Fluiddruck vollkommen abgebaut wird.

Vorzugsweise ist nach Abschalten der Aktuatoreinheit bei noch eingerückten Kupplungsteilen und bei einem sehr geringen übertragenen Drehmoment an den Kupplungsteilen die ausrückende Kraft der Ausrückeinheit betragsmäßig kleiner als (nämlich während des gedrosselten Druckabbaus) bzw. im Wesentlichen gleich (nämlich nach Erreichen des genannten minimalen Fluiddrucks) der Summe der axialen Reibungskraft zwischen den Kupplungsteilen und der durch den momentanen Fluiddruck verursachten einrückenden Kraft der Aktuatoreinheit. Die Kupplungsteile rücken somit selbsttätig aus, wenn die ausrückende Kraft die Summe der axialen Reibungskraft und der einrückenden Kraft des Aktuators übersteigt. Dadurch wird sichergestellt, dass kein vorzeitiges Aufheben des Formschlusses zwischen den Kupplungsteilen erfolgt.

Wenn die Drosseleinrichtung und/oder das Druckhalteventil variabel einstellbar sind, kann auf einfache Weise die vorbestimmte Charakteristik des Druckabbaus modifiziert werden, um beispielsweise einen Verschleiß der Kupplungsteile, der Ausrückeinheit oder anderer Komponenten der Kupplungseinrichtung zu kompensieren oder um die Schaltdynamik der Kupplungseinrichtung zu justieren. Grundsätzlich können die Drosseleinrichtung und/oder das Druckhalteventil aktiv einstellbar sein, um beispielsweise in bestimmten Situationen einen schnellen Eingriff in die Eigenschaften der Kupplungseinrichtung zu ermöglichen. Bevorzugt ist es allerdings, wenn die Drosseleinrichtung und/oder das Druckhalteventil passive Bauteile sind.

Ferner kann vorgesehen sein, dass die Druckhalteeinrichtung in einer Druckabbauleitung angeordnet ist, die mit der Aktuatoreinheit in Verbindung steht und durch die der die Aktuatoreinheit beaufschlagende Fluiddruck abbaubar ist. Die Druckabbauleitung kann durch ein Sperrventil selektiv sperrbar sein. Das Sperrventil kann beispielsweise als ein Magnetventil ausgebildet sein.

Eine Sperrung der Druckabbauleitung ist insbesondere bei einem Aufbau des Fluiddrucks vorgesehen, also wenn der Aktuatoreinheit Fluid über eine Druckaufbauleitung zugeführt wird, um die Kupplungsteile einzurücken. Ferner kann das Sperrventil dazu dienen, den Fluiddruck in der Aktuatoreinheit im Wesentlichen (d.h. abgesehen von unvermeidlichen Leckageverlusten) aufrechtzuerhalten, um die Kupplungsteile - solange die Druckabbauleitung gesperrt ist - sicher eingerückt zu halten. Das Ausrücken der Kupplungsteile hingegen wird aufgrund der Wirkung der Ausrückeinheit durch Öffnen des Sperrventils, d.h. durch Freigeben der Druckabbauleitung, ausgelöst, wobei die genannte Drosseleinrichtung das erläuterte zeitliche Verzögern des Ausrückens der Kupplungsteile bewirken kann.

Bei einem besonders einfachen Aufbau der Aktuatoreinheit, nämlich mit einem einzigen Sperrventil und einer einzigen Anschlussleitung zwischen dem Sperrventil und dem Druckraum der Aktuatoreinheit, ist die Druckhalteeinrichtung, insbesondere das genannte Druckhalteventil, im Unterschied zu einem typischen Überdruckventil vorzugsweise an einer der Aktuatoreinheit abgewandten Seite des Sperrventils angeordnet, d.h. stromabwärts des Sperrventils bezüglich der Strömungsrichtung bei Druckabbau. Somit kann durch Schließen des Sperrventils verhindert werden, dass die Druckhalteeinrichtung einem erwünschten Aufbau des Fluiddrucks zum Einrücken der Kupplungsteile entgegenwirkt. Falls hingegen zusätzlich zu der Druckabbauleitung mit Sperrventil eine separate Druckaufbauleitung mit eigenem Sperrventil vorgesehen ist, wobei beide Leitungen mit dem Druckraum der Aktuatoreinheit verbunden sind, so kann die Druckhalteeinrichtung grundsätzlich an beliebiger Stelle entlang der Druckabbauleitung angeordnet sein.

Die Aktuatoreinheit kann hydraulisch oder pneumatisch betreibbar sein.

Insbesondere bei einer pneumatisch betriebenen Aktuatoreinheit kann die genannte Druckabbauleitung mit der Umgebungsluft in Verbindung stehen. Bei einer hydraulisch betriebenen Aktuatoreinheit kann die genannte Druckabbauleitung in einen Sumpf für das Fluid münden.

Eine kompakte Bauweise lässt sich erreichen, wenn die Drosseleinrichtung, das Druckhalteventil und/oder das Sperrventil zu einer Baueinheit zusammengefasst sind.

Die genannte Druckabbauleitung bildet vorzugsweise einen Hauptverbindungspfad, der von der Aktuatoreinheit (z.B. von einem Druckraum für einen Kolben) zu der Umgebung der Kupplungseinrichtung (bei Verwendung von Druckluft) oder zu einem Sumpf führt (bei Verwendung eines flüssigen Arbeitsfluids). Mit anderen Worten soll die Druckhalteeinrichtung nicht in einem Nebenverbindungspfad für das Fluid (z.B. Rückkopplungspfad) wirken, sondern in einer direkten Verbindung zwischen der Aktuatoreinheit und der Fluidaufnahme (Umgebungsluft oder Sumpf). Hierdurch wird erreicht, dass der erwünschte Druckhalteeffekt zuverlässig und reproduzierbar erreicht wird, um den Fluiddruck gemäß der vorbestimmten Charakteristik abzubauen.

Insbesondere kann eine einzige Druckabbauleitung vorgesehen sein, über die der die Aktuatoreinheit beaufschlagende Fluiddruck abbaubar ist, wobei die Druckhalteeinrichtung in dieser einzigen Druckabbauleitung angeordnet oder wirksam ist.

Weiterhin ist es bevorzugt, wenn die genannte Druckhalteeinrichtung lediglich in der Druckabbauleitung angeordnet oder wirksam ist, nicht jedoch in einer Druckaufbauleitung (d.h. Fluidzufuhrleitung), durch die der Fluiddruck in der Aktuatoreinheit aufgebaut wird. Mit anderen Worten soll die Druckhalteeinrichtung nicht die Zufuhr des Arbeitsfluids zu der Aktuatoreinheit (z.B. Druckraum für einen Kolben) behindern, damit ein Einrücken der Kupplungsteile nicht verzögert wird. Bei einer formschlüssig wirksamen Kupplungseinrichtung ist es wichtig, dass das Einrücken schnell erfolgt, bevor die Drehzahldifferenz zu groß wird.

Eine konstruktiv einfache und gleichwohl effiziente Ausgestaltung der Ausrückeinheit umfasst eine Druckfeder, welche die Kupplungsteile in Ausrückrichtung vorspannt.

Die Erfindung bezieht sich auch auf eine Kupplungseinrichtung für einen Antriebsstrang eines Kraftfahrzeugs, mit einem ersten Kupplungsteil und einem zweiten Kupplungsteil, die selektiv formschlüssig miteinander in Eingriff bringbar sind; einer Druckfeder, welche das erste Kupplungsteil und das zweite Kupplungsteil in einer Ausrückrichtung vorspannt; einer Aktuatoreinheit, die mittels eines Fluiddrucks betreibbar ist, um das erste Kupplungsteil und das zweite Kupplungsteil entgegen der Ausrückrichtung einzurücken; einer Druckabbauleitung, die von der Aktuatoreinheit zu einer Fluidaufnahme führt und zum Abbauen eines in der Aktuatoreinheit aufgebauten Fluiddruck vorgesehen ist; und einer Druckhalteeinrichtung, die in der Druckabbauleitung wirksam ist, um den in der Aktuatoreinheit aufgebauten Fluiddruck gemäß einer vorbestimmten Charakteristik abzubauen. Die vorstehend erläuterten Ausführungsformen und Weiterbildungen lassen sich auch auf eine solche Kupplungseinrichtung übertragen.

Die Erfindung betrifft ferner ein Verfahren zum Steuern einer Kupplungseinrichtung mit formschlüssig zusammenwirkenden und selektiv miteinander in Eingriff bringbaren Kupplungsteilen. Die Kupplungseinrichtung weist eine Steuereinrichtung auf, die eine Ausrückeinheit und eine mittels eines Fluiddrucks betreibbare Aktuatoreinheit umfasst. Durch die Ausrückeinheit ist eine die Kupplungsteile ausrückende Kraft erzeugbar, während durch die Aktuatoreinheit eine die Kupplungsteile einrückende Kraft erzeugbar ist. Zum Ausrücken der Kupplungsteile wird über eine Druckhaltevorrichtung der die Aktuatoreinheit beaufschlagende Fluiddruck gemäß einer vorbestimmten Charakteristik abgebaut. Insbesondere wird der Fluiddruck gedrosselt abgebaut. Alternativ oder zusätzlich zu einem gedrosselten Druckabbau kann vorgesehen sein, dass der die Aktuatoreinheit beaufschlagende Fluiddruck nur so weit abgebaut wird, dass ein Minimaldruckniveau (d.h. der vorgenannte minimale Fluiddruck) nicht unterschritten wird.

Weitere Ausführungsformen der Erfindung sind in der Beschreibung, den Ansprüchen und den beigefügten Zeichnungen angegeben.

Nachfolgend werden vorteilhafte Ausführungsformen der vorliegenden Erfindung rein beispielhaft unter Bezugnahme auf die beigefügten Zeichnungen erläutert. Es zeigen:

Fig. 1    eine Schemazeichnung einer Ausführungsform der erfindungsgemäßen Kupplungseinrichtung,

Fig. 2    ein Diagramm zur Verdeutlichung des zeitlichen Verlaufs der während eines Ausrückvorgangs in der Kupplungseinrichtung auftretenden Kräfte.

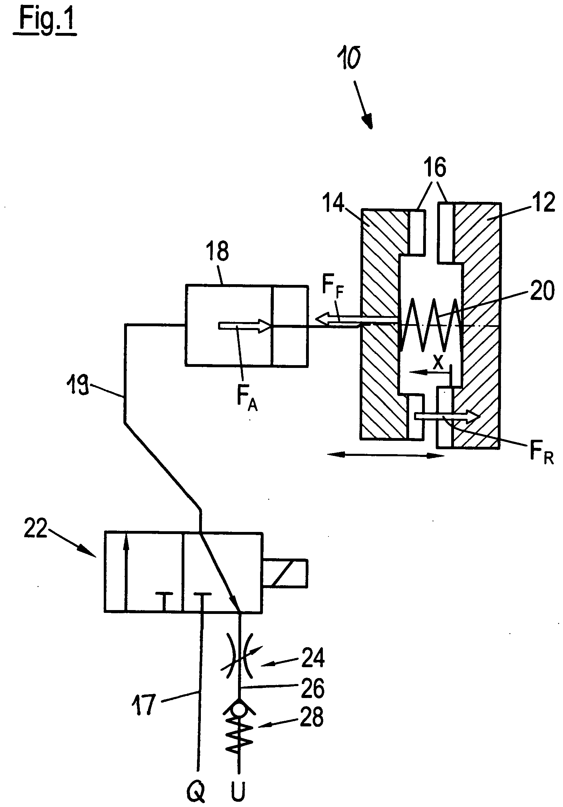

Fig. 1 zeigt eine Kupplungseinrichtung 10, die ein axialfestes Kupplungsteil 12 und ein axial bewegliches Kupplungsteil 14 umfasst. Die Kupplungsteile 12, 14 weisen komplementär ausgebildete Klauen 16 auf, die formschlüssig in Eingriff miteinander bringbar sind, um ein Drehmoment zwischen den Kupplungsteilen 12, 14 zu übertragen. Bezüglich der prinzipiellen Funktionsweise einer derartigen Kupplungseinrichtung wird auf das eingangs genannte Dokument EP 0 510 457 A1 verwiesen.

Auf das axial bewegliche Kupplungsteil 14 wirken eine Reihe von Kräften, um dieses selektiv in axialer Richtung bewegen zu können (symbolisch gekennzeichnet durch einen Doppelpfeil unterhalb des Kupplungsteils 14). Zum einen wirkt auf das Kupplungsteil 14 in Einrückrichtung eine durch einen Aktuator 18 erzeugte Aktuatorkraft $F_A$. In dem vorliegenden Beispiel ist der Aktuator 18 pneumatisch betrieben, so dass die Aktuatorkraft $F_A$ eine Funktion eines ihm zugeführten Drucks p ist. Hierfür wird dem Aktuator 18 Druckluft aus einer Druckluftquelle Q über eine Druckaufbauleitung 17 und eine Anschlussleitung 19 zugeführt, um den Druck p in einem Druckraum des Aktuators 18 zu erhöhen.

Zum anderen wirkt auf das Kupplungsteil 14 in Ausrückrichtung eine durch eine Druckfeder 20 erzeugte Federkraft $F_F$, die einem Eingriff der Kupplungsteile 12, 14 somit entgegenwirkt. Mit anderen Worten sind die Kupplungsteile 12, 14 durch die Druckfeder 20 in Ausrückrichtung vorgespannt. Die Federkraft $F_F$ ist eine Funktion eines Abstands x der Kupplungsteile 12, 14 (entsprechend der Federauslenkung). In einem Zustand x = 0 ist die Kupplungseinrichtung 10 vollständig eingerückt.

Neben den Kräften $F_A$, $F_F$ wirkt auf das axial bewegliche Kupplungsteil 14 eine Reibungskraft mit einer axialen Komponente $F_R$ (bezogen auf die Rotationsachse der Kupplungseinrichtung 10), sobald die Klauen 16 der Kupplungsteile 12, 14 in Eingriff gelangen und ein Drehmoment über die Kupplungsteile 12, 14 übertragen wird. Die Reibungskraft $F_R$ wirkt wie die Aktuatorkraft $F_A$ einem Ausrücken entgegen und hängt unter anderem von dem zwischen den Kupplungsteilen 12, 14 übertragenen Drehmoment, von der Ausgestaltung der Flanken der Klauen 16 und von deren Beschaffenheit ab. Die Reibungskraft $F_R$ kann außer der Reibung an den Klauen 16 der Kupplungsteile 12, 14 auch noch andere Reibkräfte enthalten, die der Bewegung des axial beweglichen Kupplungsteils 14 entgegenwirken.

In allgemeiner Form lässt sich das eine Bewegung des Kupplungsteils 14 definierende Kräftegleichgewicht wie folgt formulieren:

$$F_F(x) = F_A(p) + F_R(x, M),$$

wobei M der Betrag des durch die Kupplungseinrichtung übertragenen Drehmoments ist. Je größer das Drehmoment M ist, desto stärker wirken die Klauen 16 der Kupplungsteile 12, 14 zusammen, was zu einer höheren axialen Reibungskraft $F_R$ führt.

In einem eingerückten Zustand ist die Federkraft $F_F$ kleiner als die Summe der Aktuatorkraft $F_A$ und der Reibungskraft $F_R$. Um ein Ausrücken zu bewirken, kann nun eine der beiden Kräfte $F_A$, $F_R$ - oder beide - abgesenkt werden, bis die Summe der Kräfte $F_A$, $F_R$ die Federkraft $F_F$ unterschreitet und die Kupplungseinrichtung 10 selbsttätig ausrückt. Bei einem Unterschreiten von $F_F$ sorgt die Feder 20 nämlich dafür, dass sich das axial bewegliche Kupplungsteil 14 von dem axialfest angeordneten Kupplungsteil 12 wegbewegt, bis die Klauen 16 nicht mehr im Eingriff sind.

Eine Absenkung der Reibungskraft $F_R$ erfolgt beispielsweise dann, wenn das übertragene Drehmoment M abnimmt. Der Ausrückvorgang der Kupplungseinrichtung 10 setzt ein, wenn die Reibungskraft $F_R$ bei einer gegebenen Aktuatorkraft $F_A$ unter einen bestimmten Schwellenwert sinkt, so dass $F_F > F_A + F_R$.

Alternativ oder gleichzeitig kann die Aktuatorkraft $F_A$ abgesenkt werden, bis $F_F > F_A + F_R$. Zu diesem Zweck wird der Druck p des den Aktuator 18 beaufschlagenden Druckfluids - hier beispielhaft Druckluft - verringert. Dazu wird ein Magnetventil 22 geöffnet, d.h. in die in Fig. 1 gezeigte Stellung gebracht, so dass die Druckluft an die Umgebung U (Atmosphäre) abgegeben werden kann. Zu diesem Zweck ist das Magnetventil 22 als ein 3/2-Wegeventil ausgeführt, und es ist zwischen dem Aktuator 18 und der Anschlussleitung 19 einerseits und der Druckluftquelle Q und der Umgebung U andererseits angeordnet.

Durch Öffnen des Magnetventils 22 wird also ein Ausrücken der Kupplungseinrichtung 10 ausgelöst, wobei der Ausrückvorgang tatsächlich erst dann einsetzt, wenn die vorgenannte Bedingung $F_F > F_A + F_R$ erfüllt ist.

Um zu verhindern, dass der Druckabbau in dem Aktuator 18 schlagartig geschieht und dadurch ein unkontrolliertes Ausrücken der Kupplungseinrichtung 10 erfolgt, ist eine Drossel 24 in einer Druckabbauleitung 26 angeordnet, die den Aktuator 18 über das Magnetventil 22 mit der Umgebung U verbindet. Bei einer Öffnung des Magnetventils 22 wird der auf den Aktuator 18 wirkende Druck p gedrosselt abgebaut, um einen kontrollierten Ausrückvorgang zu gewährleisten. Insbesondere wird auch eine Beschleunigung des Kupplungsteils 14 unterbunden, die bei herkömmlichen Kupplungseinrichtungen auftritt, sobald die Klauen 16 ab einem bestimmten Punkt des Ausrückprozesses außer Eingriff geraten und damit die Reibungskraft $F_R$ schlagartig auf Null absinkt. Der gedrosselte Abbau des Fluiddrucks p gemäß einer vorbestimmten Charakteristik, die durch die Ausgestaltung der Drossel 24 bestimmt wird, ist ferner insbesondere dann von Vorteil, wenn vergleichsweise große Schwankungen des übertragenen Drehmoments M während des Ausrückprozesses vorliegen, da ein Schaltpendeln durch die Verhinderung eines verfrühten Ausrückens der Kupplungsteile 12, 14 vermieden wird.

Die Drosselwirkung der Drossel 24 kann aktiv oder passiv einstellbar sein, um die Ausrückdynamik der Kupplungseinrichtung 10 bedarfsgerecht anpassen zu können.

Zusätzlich zu der Drossel 24 ist in der Druckabbauleitung 26 ein Druckhalteventil 28 vorgesehen, dessen Aufgabe es ist, dafür zu sorgen, dass stets ein vorbestimmtes minimales Druckniveau $p_{min}$ den Aktuator 18 beaufschlagt, d.h. in der Druckkammer des Aktuators 18 aufrechterhalten bleibt. Durch das minimale Druckniveau $p_{min}$ wirkt der Aktuator 18 als eine Art "Anschlag". Wenn die Kupplungseinrichtung 10 ausgerückt ist, wirkt bei $F_F = F_A(p_{min})$ keine Kraft mehr auf das Kupplungsteil 14 und folglich ist ein Gleichgewichtszustand erreicht, in dem das axial bewegliche Kupplungsteil 14 eine Ruheposition einnimmt.

Mit anderen Worten ist das Druckhalteventil 28 ein Rückschlagventil, das auf seiner stromaufwärtigen Seite einen vorbestimmten Überdruck $p_{min}$ aufrechterhält. Dadurch wird auch verhindert, dass Umgebungsluft in das pneumatische System eindringt und dort bei einem Druckabbau der Druckluft während eines Ausrückvorgangs zu Vereisungen führt. Außerdem kann somit ein neuerliches Einrücken der Kupplungseinrichtung 10 schneller eingeleitet werden, da im Vergleich zu einem vollständig entleerten Druckraum nur ein relativ geringer Druckaufbau im Aktuator 18 erforderlich ist. Der genannte minimale Druck $p_{min}$, der für das Druckhalteventil 28 die Schaltschwelle bildet, ist (anders als bei einem herkömmlichen Überdruckventil) geringer als der im Betrieb der Kupplungseinrichtung 10 zum Einrücken der Kupplungsteile 12, 14 verwendete Druck p. Nach dem gedrosselten Druckabbau auf das vorgenannte minimale Druckniveau $p_{min}$ bezieht sich die vorgenannte Ausrückbedingung $F_F > F_A + F_R$ somit auf die bei $p_{min}$ noch verbleibende Aktuatorkraft $F_A(p_{min})$.

Es versteht sich, dass auch das Druckhalteventil 28 aktiv oder passiv einstellbar sein kann, um den vorbestimmten minimalen Druck $p_{min}$ variabel einstellen und damit die Eigenschaften der Kupplungseinrichtung 10 beeinflussen zu können.

Bei bestimmten Ausführungsformen kann vorgesehen sein, auf entweder die Drossel 24 oder das Druckhalteventil 28 zu verzichten. Die Reihenfolge der Komponenten 24 und 28 ist beliebig, allerdings sind sie bei dem in Fig. 1 gezeigten Ausführungsbeispiel, bei dem die Anschlussleitung 19 sowohl der Druckluftzufuhr als auch dem Druckabbau dient, auf der dem Aktuator 18 abgewandten Seite des Magnetventils 22 lediglich in der Druckabbauleitung 26 angeordnet. Die Drossel 24 und das Druckhalteventil 28 können auch in eine Baueinheit integriert sein. Ferner können die Drossel 24 und/oder das Druckhalteventil 28 in das Magnetventil 22 integriert sein.

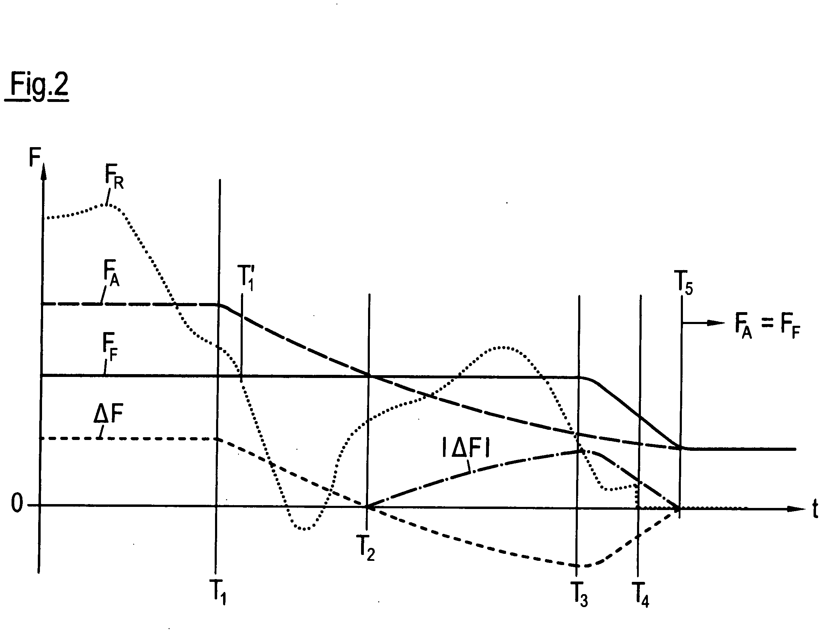

Fig. 2 zeigt den zeitlichen Verlauf der in der Kupplungseinrichtung 10 wirkenden relevanten Kräfte während eines Ausrückvorgangs.

Die Fig. 2 zeigt beispielhaft einen Verlauf der Reibungskraft $F_R$, die aufgrund von Drehmomentschwankungen in einem Antriebsstrang eines Fahrzeugs variiert. In gleicher Richtung - also einrückend - wirkt die Aktuatorkraft $F_A$. In Gegenrichtung wirkt die Federkraft $F_F$. Die Differenz zwischen der Aktuatorkraft $F_A$ und der Federkraft $F_F$ wird durch den Verlauf von $\Delta F$ (Differenzkraft) dargestellt.

Vor dem Beginn des Ausrückprozesses sind die Kräfte $F_A$, $F_F$ konstant, während die Reibungskraft $F_R$ zeitlich schwankt. Zu dem Zeitpunkt $T_1$ wird das Magnetventil 22 der Kupplungseinrichtung 10 der Fig. 1 geöffnet, um den den Aktuator 18 beaufschlagenden Druck p zu reduzieren und damit ein Ausrücken der Kupplungseinrichtung 10 zu bewirken. Im Gegensatz zu Systemen herkömmlicher Art beginnt der Ausrückprozess nicht zum Zeitpunkt $T_1'$, wenn die Kräfte $F_F$, $F_R$ zum ersten Mal nach dem Zeitpunkt $T_1$ gleich groß sind. Aufgrund des gedrosselten Druckabbaus sinkt die Aktuatorkraft $F_A$ nämlich zunächst langsamer ab, was sich auch im Verlauf der Differenzkraft $\Delta F$ widerspiegelt. Erst ab dem Zeitpunkt $T_2$, in dem die Differenzkraft $\Delta F = F_A - F_F = 0$ und danach negativ ($F_A < F_F$) ist, kann ein Ausrücken erfolgen. Aufgrund der Fluktuationen der Reibungskraft $F_R$ als Ergebnis eines zeitlich variablen Drehmomentübertrags überwiegt aber noch die Summe der einrückend wirkenden Kräfte $F_A$, $F_R$, so dass in dem dargestellten Beispiel noch kein Ausrücken der Kupplungseinrichtung 10 erfolgt.

Ab dem Zeitpunkt $T_2$ ist zusätzlich zu der negativ werdenden Differenzkraft $\Delta F$ (d.h. die Federkraft $F_F$ ist ab diesem Zeitpunkt größer als die Aktuatorkraft $F_A$) auch der Betrag der Differenzkraft $|\Delta F|$ dargestellt. Sobald der Betrag der Differenzkraft $|\Delta F|$ größer wird als die Reibungskraft $F_R$, beginnt der Ausrückvorgang, hier im Zeitpunkt $T_3$. Durch den Ausrückvorgang wird aufgrund des wachsenden Abstands x zwischen den Kupplungsteilen 12, 14 eine Reduktion der Federkraft $F_F$ und eine Änderung der Reibungskraft $F_R$ bewirkt, wobei letztere noch durch Drehmomentfluktuationen überlagert wird.

Ab dem Zeitpunkt $T_4$ stehen die Klauen 16 der Kupplungsteile 12, 14 nicht mehr in Kontakt, so dass die Reibungskraft $F_R$ abrupt abfällt. Das bewegliche Kupplungsteil 14 wird durch die Wirkung der Federkraft $F_F$ weiter von dem axialfesten Kupplungsteil 12 weggedrückt. Durch die Zunahme des Abstands x sinkt die Federkraft $F_F$. Gleichzeitig sinkt die Aktuatorkraft $F_A$ bis sie einen durch den vorbestimmten Minimaldruck $p_{min}$ definierten Wert erreicht. Sobald sich ein Kräftegleichgewicht zwischen den Kräften $F_A$ und $F_F$ einstellt - d.h. sobald die Differenzkraft $\Delta F$ wieder den Wert Null annimmt -, ist ein Gleichgewichtszustand erreicht, der in dem Diagramm der Fig. 2 durch den Zeitpunkt $T_5$ gekennzeichnet ist. Das Kupplungsteil 14 befindet sich nun in einer ausgerückten Ruheposition.

Aus den vorstehenden Erläuterungen ist ersichtlich, dass das Verhalten der Kupplungseinrichtung 10 auf einfache Weise durch eine geeignete Wahl der Drosselwirkung der Drossel 24 und eine Wahl des Minimaldrucks $p_{min}$ beeinflusst werden kann. Ein die Kupplungseinrichtung 10 schädigendes Schaltpendeln kann auf effiziente Weise verhindert werden, was zu einem verminderten Verschleiß aller beteiligten Komponenten führt. Auch die Geräuschentwicklung bei einem Ausrückprozess ist verringert, da ein "pneumatischer Anschlag" realisiert ist und ein mechanischer Anschlag entfallen kann. Eine Anpassung der Drossel 24 und des Druckhalteventils 28 ermöglicht es, die Kupplungseinrichtung 10 in verschiedenen Anwendungsbereichen einzusetzen, ohne dass konstruktive Änderungen notwendig sind. Insbesondere ist eine individuelle Anpassung der Federkraft durch Bereitstellung einer entsprechenden Feder für den jeweiligen Anwendungsfall nicht notwendig, sondern kann durch eine geeignete Justierung der Drossel 24 und des Druckhalteventils 28 erreicht werden.

Bezugszeichenliste

| 10 | Kupplungseinrichtung |
| 12 | axialfestes Kupplungsteil |
| 14 | axial bewegliches Kupplungsteil |
| 16 | Klaue |
| 17 | Druckaufbauleitung |
| 18 | Aktuator |
| 19 | Anschlussleitung |
| 20 | Druckfeder |
| 22 | Magnetventil |
| 24 | Drossel |
| 26 | Druckabbauleitung |
| 28 | Druckhalteventil |
| p | Druck |
| $p_{min}$ | Minimaldruck |
| x | Abstand |
| M | Drehmoment |
| Q | Druckluftquelle |
| U | Umgebung |
| $F_A$ | Aktuatorkraft |
| $F_F$ | Federkraft |
| $F_R$ | Reibungskraft |
| $\Delta F$ | Differenzkraft |
| $T_1, T_1{}', T_2, T_3, T_4, T_5$ | Zeitpunkt |

**Patentansprüche**

1. Kupplungseinrichtung für einen Antriebsstrang eines Kraftfahrzeugs, mit einem ersten Kupplungsteil (12) und einem zweiten Kupplungsteil (14), die selektiv formschlüssig miteinander in Eingriff bringbar sind, und mit einer Steuereinrichtung, die eine Ausrückeinheit (20) und eine mittels eines Fluiddrucks (p) betreibbare Aktuatoreinheit (18) umfasst, wobei durch die Ausrückeinheit (20) eine die Kupplungsteile (12, 14) ausrückende Kraft ($F_F$) erzeugbar ist und durch die Aktuatoreinheit (18) eine die Kupplungsteile einrückende Kraft ($F_A$) erzeugbar ist, **dadurch gekennzeichnet, dass**
der Steuereinrichtung eine Druckhalteeinrichtung (24, 28) zugeordnet ist, um einen die Aktuatoreinheit (18) beaufschlagenden Fluiddruck (p) gemäß einer vorbestimmten Charakteristik abzubauen.

2. Kupplungseinrichtung nach Anspruch 1,
**dadurch gekennzeichnet, dass**
die Druckhalteeinrichtung eine Drosseleinrichtung (24) umfasst, mit welcher der die Aktuatoreinheit (18) beaufschlagende Fluiddruck (p) gedrosselt abbaubar ist.

3. Kupplungseinrichtung nach Anspruch 1 oder 2,
**dadurch gekennzeichnet, dass**
die Druckhalteeinrichtung ein Druckhalteventil (28) umfasst, mit dem ein die Aktuatoreinheit (18) beaufschlagender minimaler Fluiddruck ($p_{min}$) aufrecht erhaltbar ist.

4. Kupplungseinrichtung nach Anspruch 3,
**dadurch gekennzeichnet, dass**
der die Aktuatoreinheit (18) beaufschlagende minimale Fluiddruck ($p_{min}$) geringer ist als der zum Einrücken der Kupplungsteile (12, 14) vorgesehene Fluiddruck (p).

5. Kupplungseinrichtung nach zumindest einem der vorstehenden Ansprüche,
**dadurch gekennzeichnet, dass**
nach Abschalten der Aktuatoreinheit (18) bei eingerückten Kupplungsteilen (12, 14) und bei einem sehr geringen übertragenen Drehmoment an den Kupplungsteilen (12, 14) die ausrückende Kraft ($F_F$) der Ausrückeinheit (20) betragsmäßig kleiner als oder im Wesentlichen gleich der Summe der axialen Reibungskraft ($F_R$) zwischen den Kupplungsteilen (12, 14) und der durch den Fluiddruck (p) verursachten einrückenden Kraft ($F_A$) der Aktuatoreinheit (18) ist, wobei die Kupplungsteile (12, 14) selbsttätig ausrücken, wenn die ausrückende Kraft ($F_F$) die Summe der axialen Reibungskraft ($F_R$) und der einrückenden Kraft ($F_A$) übersteigt.

6. Kupplungseinrichtung nach zumindest einem der vorstehenden Ansprüche,
**dadurch gekennzeichnet, dass**
die Druckhalteeinrichtung (24, 28) variabel einstellbar ist, und/oder dass
die Druckhalteeinrichtung (24, 28) ein passives Bauteil ist.

7. Kupplungseinrichtung nach zumindest einem der vorstehenden Ansprüche,
**dadurch gekennzeichnet, dass**
die Druckhalteeinrichtung (24, 28) in einer Druckabbauleitung (26) angeordnet oder wirksam ist, die mit der Aktuatoreinheit (18) in Verbindung steht und durch die der die Aktuatoreinheit (18) beaufschlagende Fluiddruck (p) abbaubar ist.

8. Kupplungseinrichtung nach Anspruch 7,
**dadurch gekennzeichnet, dass**
die Druckabbauleitung (26) durch ein Sperrventil (22), das insbesondere als Magnetventil ausgebildet ist, selektiv sperrbar ist.

9. Kupplungseinrichtung nach Anspruch 8,
**dadurch gekennzeichnet, dass**
die Druckhalteeinrichtung (24, 28) an einer der Aktuatoreinheit (18) abgewandten Seite des Sperrventils (22) angeordnet ist, und/oder dass
zumindest ein Teil der Druckhalteeinrichtung (24, 28) und das Sperrventil (22) zu einer Baueinheit zusammengefasst sind.

10. Kupplungseinrichtung nach zumindest einem der Ansprüche 7 bis 9,
**dadurch gekennzeichnet, dass**
die Druckabbauleitung (26) einen Hauptverbindungspfad bildet, der von der Aktuatoreinheit (18) zu einer Fluidaufnahme (U) führt, und/oder dass
die Druckhalteeinrichtung (24, 28) lediglich in der Druckabbauleitung (26) angeordnet oder wirksam ist, nicht jedoch in einer Druckaufbauleitung (17), durch die der die Aktuatoreinheit (18) beaufschlagende Fluiddruck (p) aufbaubar ist.

11. Kupplungseinrichtung nach zumindest einem der Ansprüche 7 bis 10,
**dadurch gekennzeichnet, dass**
die Druckabbauleitung (26) mit der Umgebungsluft (U) in Verbindung steht.

**12.** Kupplungseinrichtung nach zumindest einem der vorstehenden Ansprüche,
**dadurch gekennzeichnet, dass**
die Ausrückeinheit eine Druckfeder (20) umfasst,
und/oder dass
die Aktuatoreinheit (18) hydraulisch oder pneumatisch betreibbar ist.

**13.** Verfahren zum Steuern einer Kupplungseinrichtung mit formschlüssig zusammenwirkenden und selektiv miteinander in Eingriff bringbaren Kupplungsteilen (12, 14) und mit einer Steuereinrichtung, die eine Ausrückeinheit (20) und eine mittels eines Fluiddrucks (p) betreibbare Aktuatoreinheit (18) umfasst, wobei durch die Ausrückeinheit (20) eine die Kupplungsteile (12, 14) ausrückende Kraft ($F_F$) erzeugt wird und durch die Aktuatoreinheit (18) eine die Kupplungsteile (12, 14) einrückende Kraft ($F_A$) erzeugt wird, **dadurch gekennzeichnet, dass** der die Aktuatoreinheit (18) beaufschlagende Fluiddruck (p) mittels einer Druckhaltevorrichtung (24, 28) gemäß einer vorbestimmten Charakteristik abgebaut wird.

**14.** Verfahren nach Anspruch 13,
**dadurch gekennzeichnet, dass**
der die Aktuatoreinheit (18) beaufschlagende Fluiddruck (p) mittels der Druckhaltevorrichtung (24, 28) gedrosselt abgebaut wird.

**15.** Verfahren nach Anspruch 13 oder 14,
**dadurch gekennzeichnet, dass**
der die Aktuatoreinheit (18) beaufschlagende Fluiddruck (p) mittels der Druckhaltevorrichtung (24, 28) nur soweit abgebaut wird, dass ein Minimaldruckniveau ($p_{min}$) nicht unterschritten wird.

## Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0510457 A1